# EUROPEAN PATENT APPLICATION

(11) **EP 3 211 891 A1**
(43) Date of publication of application: **30.08.2017**
(21) Application number: 17155806.7
(22) Date of filing: 13.02.2017
(51) Int. Cl.: H04N 7/18, G07G 1/00, G08B 13/196

(54) **IDENTIFICATION AND IMAGING OF TERMINAL-PROXIMATE EVENT OCCURRENCES**

(30) Priority: 29.02.2016 US 201615057070
(71) Applicant: NCR Corporation, Duluth, GA 30096 (US)
(72) Inventor: Crooks, John, Duluth, GA Georgia 30097 (US)
(74) Representative: Secerna LLP

(57) **Abstract**

Various embodiments herein each include at least one of systems, methods, and software for identification and imaging of terminal-proximate event occurrences. One such embodiment is in the form of a method (400 or 500) that includes detecting an event occurrence (step 402 or 502) and selecting at least one digital image captured with regard to a location of the detected event (step 404 or 504). This method further includes providing each of the at least one selected digital images to at least one location (step 406 or 506).

## Description

Many imaging devices are commonly deployed in modem facilities, such as retail outlets, schools, factories, and larger, fenced facilities. However, there are so many imaging devices, monitoring streams of images and video from these devices is challenging. Prior efforts have been made to identify, and bring attention to, images and video streams where there are changes, people or objects loitering, and to identify certain individuals. However, such solutions are focused on monitoring what is changing or what is present within one or more images or streams.

Various embodiments herein each include at least one of systems, methods, and software for identification and imaging of Point of Sale (POS) terminal-proximate event occurrences. One such embodiment is in the form of a method that includes detecting an event occurrence and selecting at least one digital image captured with regard to a time-location of the detected event. This method further includes providing each of the at least one selected digital images to at least one location.

Another method embodiment includes detecting, by a product scanner, an event occurrence. This method then selects at least one digital image captured with regard to a location of the detected event where each of the at least one digital images is captured by digital imaging devices present within or coupled to the product scanner. This method may then provide each of the at least one selected digital images to at least one location.

Another embodiment in the form of a produce scanner includes at least one imaging device integrated within the product scanner or electrically coupled thereto, at least one network interface device, at least one processor, and at least one memory device. The product scanner of such embodiments includes an event detection module stored as instructions in the at least one memory device that are executable by the at least one processor to perform data processing activities. The data processing activities may include monitoring data conditions within the product scanner in view of event detection rules where each event detection rule include at least one data condition, which when satisfied, indicates an event occurrence. The data processing activities also include selecting at least one digital image captured by one of the at least one imaging device. The selected image may be selected with regard to a location of and upon an occurrence of a detected event. The data processing activities further include transmitting, via the at least one network interface device, each of the at least one selected digital images to at least one network location.

According to a first aspect of the present invention there is provided a method comprising: detecting an event occurrence; selecting at least one digital image captured with regard to a location of the detected event; and providing each of the at least one selected digital images to at least one location.

The method optionally further comprises: adding metadata to at least one of the selected digital images, the metadata including data with regard to the detected event occurrence.

Providing each of the at least one selected digital images to at least one location optionally includes placing each of the at least one digital images in a transmission queue for transmission to each of the at least one locations in a next available data transmission window.

Providing each of the at least one selected digital images optionally includes transmitting each of the at least one selected digital images via a data network to at least one of: a point of sale (POS) terminal monitoring station; a network data storage location; a premises video monitoring system; and a network video recorder (NVR).

Each of the at least one digital images is optionally captured by digital imaging devices present within or coupled to a product scanner.

At least one of the digital imaging devices optionally captures video and at least one selected digital image is a portion of video captured by the video-capturing digital imaging device.

The method optionally further comprises: receiving digital images from each of the digital imaging devices; buffering digital images in an image buffer for each of the digital imaging devices for a most recent period; and wherein selecting at least one digital image with regard to a location of the detected event includes selecting at least one digital image from the buffered digital images received from a particular digital imaging device that is correlated with the location of the detected event, the digital image selected from the buffered digital images captured at a time when the event was detected.

Optionally, an event is detected upon satisfaction of one or more event rules stored within a memory of the product scanner, each event rule including at least one data condition monitored by the product scanner.

Optionally, at least one event rule monitors a data condition with regard to data received from another device coupled to the product scanner.

Optionally, each event rule includes data identifying one or more of the digital imaging devices from which the at least one digital image is to be selected upon satisfaction of the respective event rule.

The method optionally further comprises: upon detection of the event occurrence, identifying at least one digital imaging device to capture an image based on the satisfied event rule; modifying at least one parameter of the digital imaging device prior to capturing at least one image from a normal condition to an event image capturing condition; and upon capturing at least one image, returning the digital imaging device to the normal condition.

According to a second aspect of the present invention there is provided a product scanner comprising: at least one imaging device integrated within the product scanner or electrically coupled thereto; at least one network interface device; at least one processor; at least one memory device; and an event detection module including instructions stored in the at least one memory device that are executable by the at least one processor to perform data processing activities comprising: monitoring data conditions within the product scanner in view of event detection rules, each event detection rule including at least one data condition, which when satisfied, indicates an event occurrence; selecting at least one digital image captured by one of the at least one imaging devices, the selected image selected with regard to a location of and upon an occurrence of a detected event; and transmitting, via the at least one network interface device, each of the at least one selected digital images to at least one network location.

Optionally, the transmitting of each of the at least one selected digital images by the event detection module includes placing each of the at least one digital images in a transmission queue for transmission to each of the at least one network locations in a next available data transmission window.

Optionally, the transmitting of each of the at least one selected digital images by the event detection module includes transmitting each of the at least one selected digital images via at least one network interface device to at least one of: a point of sale (POS) terminal monitoring station; a network data storage location; a premises video monitoring system; and a network video recorder (NVR).

Optionally, each event rule monitored by the event detection module includes data identifying one or more of the digital imaging devices from which the at least one digital image is to be selected upon satisfaction of the respective event rule.

Optionally, the data processing activities of the event detection module further comprise: upon detection of the event occurrence, identifying at least one digital imaging device to capture an image based on the satisfied event rule; modifying at least one parameter of at least one of the identified digital imaging devices prior to capturing at least one image from a normal condition to an event image capturing condition; and upon capturing at least one image, returning each of the identified digital imaging devices to the normal condition.

According to a third aspect of the present invention there is provided a method comprising: detecting, by a product scanner, an event occurrence; selecting at least one digital image captured with regard to a location of the detected event, each of the at least one digital images captured by digital imaging devices present within or coupled to the product scanner; and providing each of the at least one selected digital images to at least one location.

The method optionally further comprises: receiving, by the product scanner, digital images from each of the digital imaging devices; buffering, in a memory device of the product scanner, digital images in an image buffer for each of the digital imaging devices for a most recent period; and wherein selecting at least one digital image with regard to a location of the detected event includes selecting at least one digital image from the buffered digital images received from a particular digital imaging device that is correlated with the location of the detected event, the digital image selected from the buffered digital images captured at a time when the event was detected.

Optionally, an event is detected upon satisfaction of one or more event rules stored within a memory of the product scanner, each event rule including at least one monitored data condition within the product scanner or data received by the product scanner.

Optionally, each event rule includes data identifying one or more of the digital imaging devices from which the at least one digital image is to be selected upon satisfaction of the respective event rule.

These and other aspects of the present invention will be apparent from the following specific description, given by way of example, with reference to the accompanying drawings, in which:
FIG. 1 is a logical block diagram of a checkout station, according to an example embodiment;
FIG. 2 is a logical block diagram of a self-service checkout area, according to an example embodiment;
FIG. 3 is a diagram illustrating components of a checkout station having a scanner, according to an example embodiment;
FIG. 4 is a block flow diagram of a method, according to an example embodiment; and
FIG. 5 is a block flow diagram of a method, according to an example embodiment.

Various embodiments herein each include at least one of systems, methods, and software for identification and imaging of terminal-proximate event occurrences. Such embodiments utilize images and video captured by one or both of imaging devices of and coupled to product scanners deployed at checkout terminals for purposes of monitoring certain events that may take place, such as scanning of a product, failure of a product scanner to scan a product when presented within a scan field, a mismatch between a scanned barcode and one or more properties of the item presented for scanning, an electronic article security (EAS) sensor violation, and the like. These images may be utilized not only for security purposes for fraud and other crime detection and monitoring, but also to assist a retail outlet operator in identifying data missing in a product database such as when a product barcode is not found in a product database. These and other embodiments are described herein with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

Product scanners, also referred to herein as scanners, utilized in modem retail outlets now include one to many digital imaging devices (i.e., cameras) integrated therein and even other digital imaging devices that may be coupled thereto. An example of such a product scanner is the 7879 product scanner available from NCR Corporation of Duluth, Georgia. Various embodiments herein utilize digital imaging devices of product scanners and other digital imaging devices that may be coupled thereto, such as by a Universal Serial Bus (USB) connection, for purposes of security monitoring. However, as mentioned above, environments where product scanners are deployed often include many imaging devices that each provide images and video. The result can be an overload of images and videos to monitor for fraud, theft, and other crimes. Various embodiments herein identify occurrences of events that have a possibility of involving a crime or other events of interest.

Some embodiments enable the use of a product scanner as a security monitoring device to enable remote monitoring of the checkout process at point-of-sale terminals, whether they be self-service checkout (SSCO) or cashier-assisted checkout terminals. Some embodiments monitor the checkout process at a terminal as well as activity around the terminal.

But utilizing images and video captured by imaging devices of product scanners is not straight forward and presents several challenges. For example, images are often captured at a relatively high-frame rate by the various imaging devices, such as at a rate of 40 frames per second or more. While such a high frame rate may be well suited for product barcode scanning, such a rapid frame rate can present challenges in some embodiments when the images or video are to be provided via a network to a remote monitoring station, network storage device, network video recorder (NVR), and the like. Some such systems may only be capable of receiving four to eight frames per second in order to manage network bandwidth and computer storage requirements.

In addition to these challenge, certain events of interest, for example seeing each product's barcode in an image, can happen too quickly for the image and video streams to capture as frames of interest. A typical scanned product may only appear in the scanner field of view for four frames on each camera, and only two frames on a single camera may contain a readable, legible barcode. This challenge can be further compounded by the relatively low frame rate of networked systems discussed above. For example, if the remote video system can receive only four randomly selected frames per second, the chances of any image of a scanned product may be 40 percent, and the chances of capturing a readable barcode image may be five percent. This is not useful for security auditing purposes.

Additionally, because remote security video systems are not tightly integrated with POS systems, it can be challenging to correlate images and video captured by imaging devices of a product scanner with POS activities. Even with tight integration, time-of-day clock inaccuracies and other system challenges make it difficult to marry the POS data with the video streaming data.

Thus, various embodiments herein not only utilize imaging devices of and coupled to product scanners for security monitoring but some such embodiments also buffer and then time-shift scanner frames-of-interest to ensure the video streams include them. Some embodiments further mark these scanner frames-of-interest with event information for later analysis. Some further embodiments may also adjust the video stream frame rate and other camera parameters in response to scanner events-of-interest.

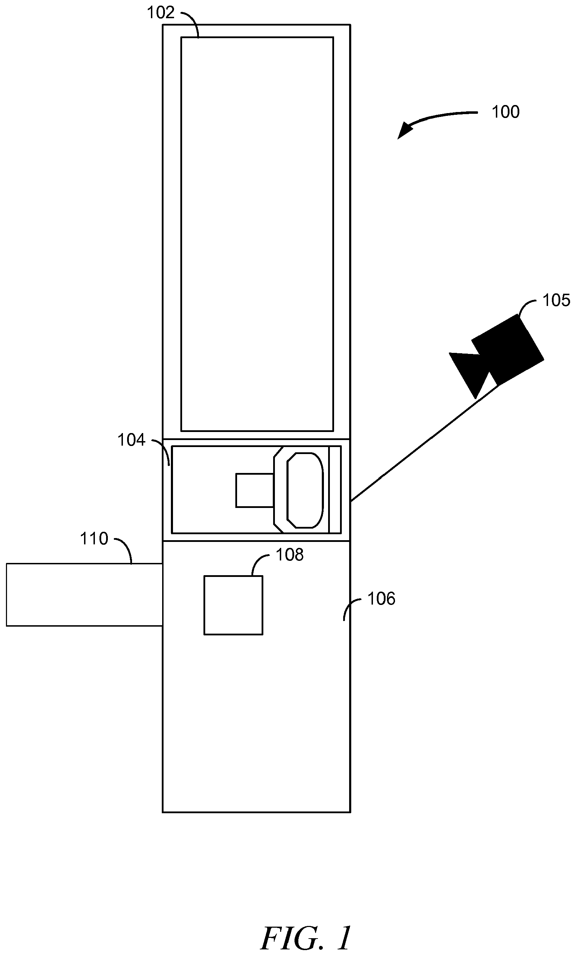

FIG. 1 is a logical block diagram of a checkout station 100, according to an example embodiment. The checkout station 100 is an example of a checkout station where a POS terminal is deployed, such as a cashier-assisted check-out or an SSCO terminal. The POS terminal includes a controlling computer 110 that is coupled to a product scanner 104. The product scanner 104 may include one or more other cameras coupled thereto, such as an overhead camera 105 that is deployed to capture a field of view of the entire checkout station 100 area or a portion thereof. The one or more other cameras may be coupled to the product scanner 104 via USB, Ethernet, various wireless connection technologies including WI-FI®, and other suitable connections. The entire area of the checkout station 100 may include a conveyor 102 that conveys products for purchase toward the product scanner 104 as well as a check-product area 106. The area within the field of view of the overhead camera 105, one or more cameras integrated within the product scanner 104, or other camera coupled to the product scanner may include a customer area to capture images and video of customer behavior. The checkout station may also include an EAS sensing device that is activated upon sensing an EAS device present on or within a product.

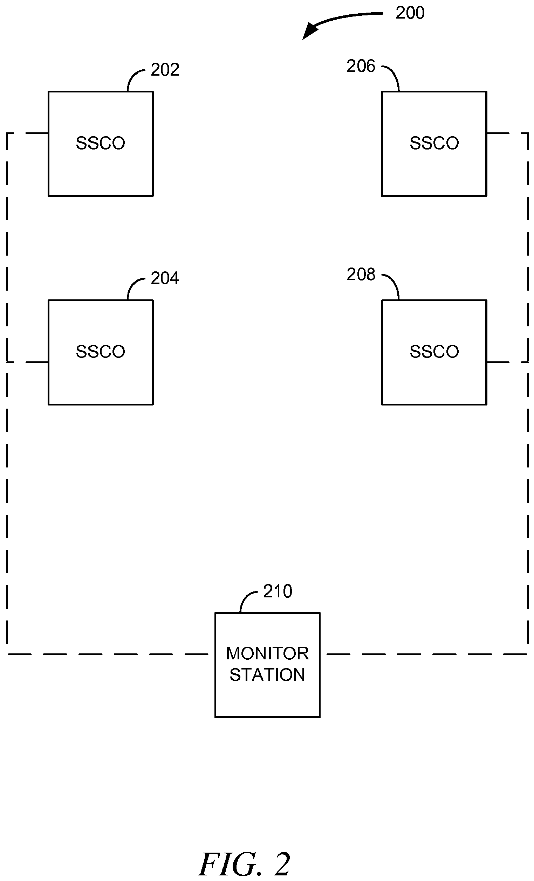

FIG. 2 is a logical block diagram of an SSCO area 200, according to an example embodiment. The SSCO area 200 includes a plurality of SSCO terminals 202, 204, 206, 208. The SSCO terminals 202, 204, 206, 208 are arranged and configured to transmit one or both of captured images and videos upon detection of certain events to an SSCO monitoring terminal 210. The SSCO terminals 202, 204, 206, 208 may provide images and video to the SSCO monitoring terminal 210 via wired or wireless connections, which may include one or more of Ethernet, WI-FI®, BLUETOOTH®, USB, and the like.

The SSCO monitoring terminal 210, upon receipt of an image or video from one of the SSCO terminals 202, 204, 206, 208 may present the image or video to enable personnel to view activities and event occurrences as they happen. An employee at the SSCO monitoring terminal 210 may utilize the images to ensure a crime or product substitution fraud is not occurring, perform further actions to ensure a product presented is properly scanned and priced, and the like.

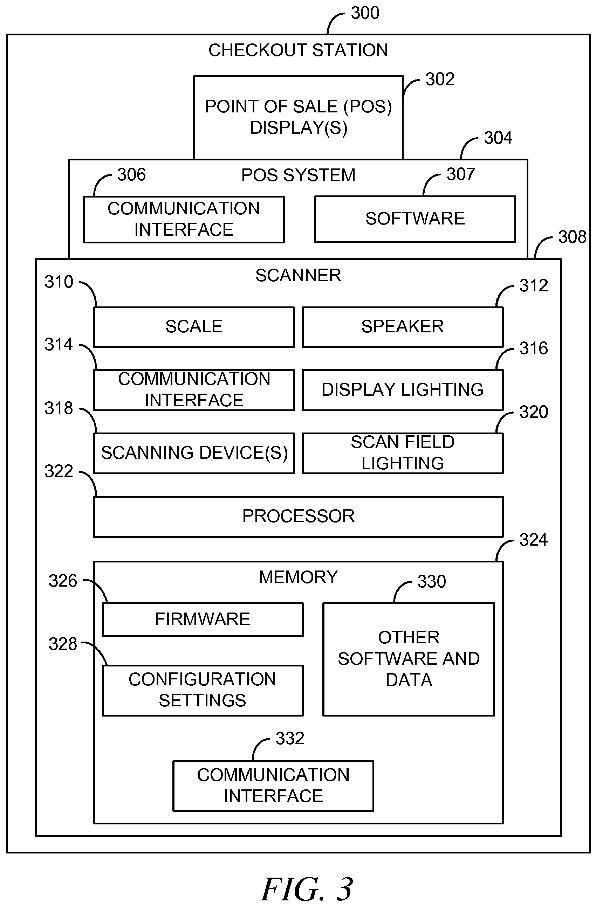

FIG. 3 is a diagram illustrating components of a checkout station 300 including a POS system 304 and scanner 308, according to an example embodiment. The checkout station 300 may be a cashier-assisted checkout or SSCO terminal. It is to be noted that the checkout station 300 is shown schematically in greatly simplified form, with example components relevant to understanding various embodiments herein. The same situation may be true for the other various components of the checkout station 300. Also, note that the checkout station 300 may include more or fewer components in some embodiments.

Furthermore, the various components included in FIG. 3 as illustrated and arranged are provided for illustration purposes only. It is to be noted that other arrangements with more or fewer components are possible without departing from the contributions herein, in particular with regard to identification and imaging of event occurrences.

Moreover, the methods, POS terminal 304, and scanner 308 presented herein and below may include all or some combination of the components shown in the context of the checkout station 300. Further, although a checkout station 300 is illustrated as including a scanner 308, the scanner 308 may be a standalone element or an element of other systems, devices, and terminals in other embodiments. Examples of other terminal-types that may include a scanner 308 are self-service terminals (SSTs) beyond just SSCO terminals, POS terminals, clerk operated and self-service library checkout stations, timekeeping terminals, and the like. Additionally, references to POS terminals herein and in the claims are general references to both POS and SSCO terminals, unless expressly stated otherwise.

The methods of some embodiments are programmed as executable instructions stored in memory and/or non-transitory computer-readable storage media and executed on one or more processors associated with the components and devices herein.

The checkout station 300 includes one or more POS displays 302 that present information of a POS system 304 coupled to the one or more POS displays 302. Information presented by the one or more POS displays 302 includes information relevant in a retail context and with regard to operation of the checkout station 300. The checkout station 300 also includes the scanner 308.

The scanner 308 may be referred to as a barcode scanner or product scanner as those are the tasks most commonly associated with such devices. During operation of the checkout station 300, items are placed within a scan field of the scanner 308. One or more scanning devices 318 of the scanner 308, such as one or more cameras and laser scanners then scan a barcode and information read therefrom is communicated to the POS system 304. The POS system 304 then uses that data to identify the item placed within the scan field of the scanner 308 and performs an additional function. The additional function may include a price lookup and addition of the item to a list of items to be purchased, which may be presented on the one or more POS displays 302.

The scanner 308 may include one or more scan fields, such as two scan fields of bi-optic scanners that are commonly seen in grocery and discount retail outlets. Each scan field may include one or more imaging devices 318, such as cameras. In some embodiments, a total of four or more cameras may be included in one or both of the scan fields, combined. Additionally, one or more other cameras may be directly or indirectly coupled to the scanner 308. In addition to the scanning devices 318, the scanner 308 may include various other components. The various other components may include an integrated scale 310 such as may be used in a grocery outlet to weigh items such as produce and one or both of a speaker 312 and display lighting 316 to output audio a visual signal such as signals of (un)successful scans. The scanner 308 may also include scan field lighting 320 that may be turned on and off and adjusted based on a detected presence of an item to be scanned or upon identification of an event occurrence where the scan field lighting 320 may be turned off to enable imaging devices 308 to capture a full field of view rather than just a product within the scan field. The scanner 308 also includes one or more of at least one of a hardware communication interface 314 or a software or firmware communication interface 332 that enables to scanner to communicate with the POS system 304 communication interface 306 and, in some embodiments, directly over a wired or wireless network.

During typical operation, the scanner 308 is operated according to instructions executed on a processor 322. The processor may be a single or multi-core ASIC, digital signal processor, microprocessor, or other type of processor. The instructions may be firmware 326 or software 330 stored in one or more memories 324. The one or more memories 324 may be or include volatile and non-volatile memories, write-protected memories, write-once memories, random access memory (RAM), read only memories (ROM), and other memory and data storage types and devices. The additional function may also include software for identification and imaging of event occurrences. The additional functions may also include software implementing one or more fraud-detection process that declares security events in view of one or more fraud-detection thresholds at the checkout station 300. Security events may freeze user interaction capabilities with the POS system 304 and scanner 308 that must be cleared before proceeding, sending a security message to another terminal or a computing or communication device of an employee having security or supervision responsibilities, and the like. At the same time, such security events may also identify an event for which one or more images may be captured or retrieved from previously captured images for transmission via the communication interface 332 to a network location for review, storage, recording, and the like.

Instructions of software 307 that control operation of the POS system 307 may be stored in a memory device of the POS system and may include processes for identification and imaging of event occurrence. However, in other embodiments, instructions of processes for identification and imaging of event occurrences is present within the software 330 stored in the memory 324 of the scanner 308.

Instructions that control operation of the scanner 308 may be stored in firmware 326 or as software 330 in memory 324. These instructions are typically executed according configuration settings stored in the memory 324. The instructions may execute in view of configuration settings 328, which may also configure operation of the scanner 308 and the various components therein. For example, the configuration settings 308 may configure speaker 312 volume, display lighting 316 outputs, scan field lighting 320 brightness, decoding algorithm of the scanning device(s) 318 and the instructions, one or more communication protocols used to communicate data from the scanner 308 to the POS system 304, such as via a wired or wireless communication interface 306 of the POS system 304, scale 330 operating parameters (e.g., unit of measure as pounds or kilograms), among other configuration settings the particular scanner 308 of an embodiment may include. In some embodiments, the configuration settings 328 may include a firmware version, a software version, and the like. Thus, when a configuration is set or updated, the setting or updating of the configuration settings 328 may include population and updates of any of the configuration settings 328 of a particular embodiment, including an update to firmware and software present on the scanner. The software 330 may also, as have mentioned above, include one or more processes for identification and imaging of event occurrences.

In some embodiments, the processes for identification and imaging of event occurrences are storing the memory 324 in the form of an event detection module. Instructions of an event detection module, in some embodiments include instructions that are executable by the at least one processor 322 to perform data processing activities. The data processing activities may include monitoring data conditions within the product scanner in view of event detection rules. In some embodiments, each event detection rule includes at least one data condition, which when satisfied, indicates an event occurrence. Examples of such a data conditions may include activation of an EAS sensor coupled to the scanner 308 or the POS system 307, a product scan, a failure to scan a presented product, a stable weight or sale weight signal from the scale 310, the scanner 308 waking upon from an inactive mode as triggered by a motion sensor, a cashier login to the POS terminal 304, an "item not on file" result on the scanner 308 or the POS system 304, and the like.

In some embodiments, upon an event detection rule being satisfied by a data condition, the data processing activities may further include selecting at least one digital image captured by one of the at least one imaging device 318 where the selected image is selected with regard to a location of the detected event. The location may be specified in an event detection rule, such as a scan field camera upon a product scan event occurrence. Subsequently, the data processing activities include transmitting, via the communication interface 332, each of the at least one selected digital images to at least one network location. The data processing activities may include additional data processing activities that implement the various other methods and processes described herein.

Events that may be detected based on event detection rules can be virtually any thing for which data may be received or inferred based on other data within one or both of the scanner 308 and the POS system 304, depending on where the particular embodiment is implemented. For example, the following is a list of events that may be detected by event detection rules. Note that a frame of interest is a video frame that captures an event of interest. Unless otherwise noted, the scanner 308 or POS system 304 can detect events based on data or though various image analysis techniques that are known in the art.
- Barcode successful read. Sometimes more than one image contributes to a barcode read due to barcode "stitching," which is known in the art. Scanners, such as the 7879 scanner available from NCR Corporation, include technology to identify a scan image that contributed the most to a given barcode read, and this is used as the frame of interest in some embodiments.
- Barcode unsuccessful read. The scanner 308 can detect an unsuccessful read by one or more of the following:
   ∘ The scanner 308 sees one or more pieces of the barcode, but not enough to read it;
   ∘ The scanner 308 detects motion in its field of view; or
   ∘ The scanner 308 detects an object and/or hand in its field of view.
- "Item not on file." The scanned product is not in the POS system 304 software 307 product look up (PLU) database. Images of not-on-file items can be sent to the store price manager account as a remind to enter the item into the PLU database. The scanner can identify not-on-file items by, for example, one of the following:
   ∘ The POS system 304 sends a not-on-file "bonk sound" command to the scanner 308; or
   ∘ The scanner 308 queries the PLU database directly via Ethernet.
- Barcodes that are poorly printed. This prompts retailers to fix their thermal barcode printers, or complain to their suppliers. The scanner detects poorly printed barcodes using existing scanner 308 capabilities.
- Item approaching on the delivery belt, as may be seen by an overhead camera.
- EAS tag has been detected and/or deactivated. The scanner 308 is connected to the EAS system and receives a message when the EAS system detects or deactivates a tag.
- Stable weight. The scanner 308 can detect whenever the scale transitions from unstable to stable weight.
- Sale weight. The scanner 308 does not normally know when the POS system 304 is recording the sale weight, so this event may desire the POS system 304 to send a new sale weight command to the scanner 308 at the moment the item sale weight is taken.
- Scanner 308 wakes up. When the scanner 308 includes a motion detector. Be default, the scanner 308 may go to sleep when it does not detect motion, and wakes up when it sees motion. This can be used to track people walking around the checkout lanes after store hours and to detect such events.
- Cashier logs in. An overhead camera may be oriented to view the cashier's face. The scanner 308 can detect the cashier logging in by one of several ways in different embodiments. For example:
   ∘ The POS system 304 sends an enable command to the scanner 308 after a long period of being disabled. The POS system 304 typically sends a disable command to the scanner 308 when the cashier logs off, and an enable command when the cashier logs on.
   ∘ The cashier logs in to the POS system 304 by scanning a barcoded ID badge that starts with a unique number prefix. The scanner 308 detects the barcode unique number prefix.
- A face has been detected by any scanner 308 camera. The face could be the cashier or the customer.
- A person crosses a pre-defined boundary within the scanner 308 field of view.
- A crowd of people is gathering within a pre-defined boundary within the scanner 308 field of view.
- In self checkout, the customer is stacking up unscanned items at the edges of the scanner 308. The customer may be preparing to sweep these items into their bag after tendering, to avoid the security scale.
- A valuable item (liquor bottle, etc.) has been detected.
- Fraud detection events. For example, fraud detection software, such as ScanWatch available from NCR Corporation of Duluth, Georgia, may include the POS system 304 sending a command to the scanner 308 to initiate analysis to identify if an item on the top plate is produce, a bottle of liquor, or other item type.

When an event occurrence is detected according an event detection rule, one or more images and video segments are gathered. Conventional video security systems simply send the latest frame available when it is time to send the next video frame. Frames are rigidly scheduled according to the target video frame rate. In some embodiments herein, the scanner 308 identifies not only an occurrence of an event of interest, but also associated frames of interest, and queues the frame(s) of interest for the next scheduled video frame(s). For example, when an NVR system or other video recording system records a limited number of frames per second, some embodiments herein identify a frame or frames that include a best view or resolution of a particular item in the frame(s), such as a barcode, to ensure the barcode is legible and that that frame(s), is actually received by the NVR or other video recording system.

Some embodiments also include manipulation of camera parameters and other parameters, such as lighting, that may impact how an image or video is captured. Some such parameters, for example, may include one or more of the following:
- Frame rate: the Open Network Video Interface Forum (ONVIF) video-over-Ethernet standard allows the camera device to adjust its video streaming frame rate in response to an event. When the scanner 308 sees a product or a particular product approaching, the scanner 308 can increase the video streaming rate, for example to 16 frames per second. When the scanner 308 does not see any products at all, the scanner 308 can decrease the video streaming rate, for example to 1 frame per second.
- Camera selection: the scanner 308 can momentarily or permanently switch the security video stream to show the camera that best captures the event of interest. For example, the overhead camera may be the best view for humans to identify a scanned item.
- Camera zoom: the security video stream typically has a resolution of 640x480 pixels, but the scanner 308 cameras may have a higher resolution, such as 1280x960 or more pixels. The scanner 398 can momentarily zoom an image or video in on an area within the frame of interest, for example the barcode.
- Camera illumination: the scanner 308 cameras can operate in a scanner-illuminated field of view with a short fixed exposure that only sees the barcode scan zone but scans very well. The scanner cameras can also operate in an ambient-illuminated field of view with automatic adjusting exposure that sees beyond the scan zone, but does not scan well due to motion blur. Barcode scan events are typically best shown with the scanner-illuminated field of view. Events involving people may be best shown with the ambient-illuminated field of view.
- Camera focus.

Some embodiments further include binding metadata to particular images or frames of interest. This metadata may include:
- Barcode scanned (symbology and data content);
- Current stable weight;
- EAS detected;
- EAS deactivated;
- Scanner enabled/disabled;
- Valuable item detected;
- Scanner diagnostic status (for remote diagnostics);
- Item passed by without successful scan;
- Time stamp;
- Indication that the frame of interest has been time warped; and
- An identifier of an event detection rule implicated;

The POS system 304 logs contain some of this data, but because of time clock inaccuracies and system integration challenges, it can be difficult to match the POS log data with the video stream images. Thus, binding the metadata to the image resolves that difficulty.

The metadata may be bound to an image or frames of video in many different ways. For example:
- Burn the metadata into the frame of interest as text such that the metadata is viewable within an image or video frame(s).
- Writing the metadata into a frame image header or image metadata.
- Hide the metadata within the image data, for example, replacing the last line of image pixels with metadata. The affected image data will appear scrambled when displayed.
- Send the data embedded within the video stream. The ONVIF standard allows for this embedding as "event services." ONVIF event services are designed to embed conventional video security events such as motion, or people crossing a fixed boundary.

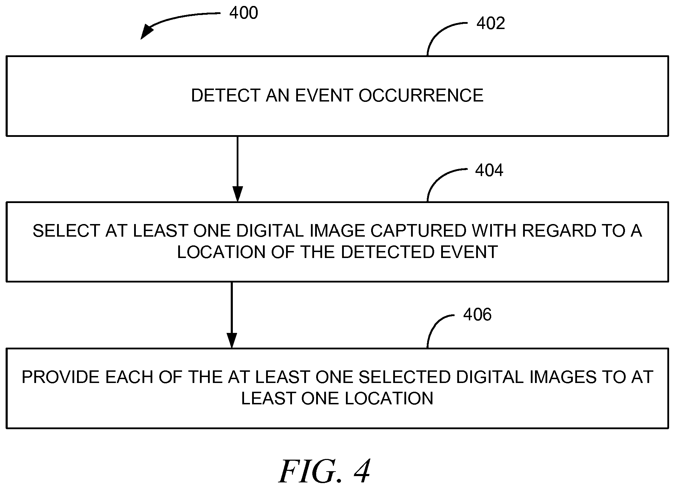

FIG. 4 is a block flow diagram of a method 400, according to an example embodiment. The method 400 is an example of a method that may be implemented on a product scanner, although in some embodiments, the method 400 may also or alternatively be implemented on a computer controlling a POS terminal or other terminal.

The method 400 includes detecting 402 an event occurrence and selecting 404 at least one digital image captured with regard to a location of the detected event. The method 400 then provides 406 each of the at least one selected digital images to at least one location. Some embodiments further include adding metadata to at least one of the selected digital images. The metadata in such embodiments typically include data with regard to the detected event occurrence.

In some embodiments of the method 400, providing 406 each of the at least one selected digital images to at least one location includes placing each of the at least one digital images in a transmission queue for transmission to each of the at least one locations in a next available data transmission window. In some of such embodiments and some other embodiments, providing 406 each of the at least one selected digital images includes transmitting each of the at least one selected digital images via a data network to at least one of a POS terminal monitoring station, a network data storage location, a premises video monitoring system, and an NVR.

Each of the at least one digital images are typically captured by digital imaging devices present within or coupled to a product scanner. In some embodiments, at least one of the digital imaging devices captures video and at least one selected digital image is a portion of video captured by the video-capturing digital imaging device.

In some embodiments the method 400 includes receiving digital images from each of the digital imaging devices and buffering digital images in an image buffer for each of the digital imaging devices for a most recent period, such as 10, 15, or 30 seconds, 1 or a greater number of minutes, and the like. In some such embodiments, selecting 404 at least one digital image with regard to a location of the detected event includes selecting at least one digital image from the buffered digital images received from a particular digital imaging device that is correlated with the location of the detected event, the digital image selected from the buffered digital images captured at a time when the event was detected.

In some embodiments of the method 400, an event is detected 403 upon satisfaction of one or more event rules stored within a memory of the product scanner, each event rule including at least one data condition monitored by the product scanner. The at least one event rule in such embodiments monitors a data condition with regard to data received from another device coupled to the product scanner.

Each of such event rules typically includes data identifying one or more of the digital imaging devices from which the at least one digital image is to be selected upon satisfaction of the respective event rule. In one such embodiment, upon detection 402 of the event occurrence, the method 400 includes identifying at least one digital imaging device to capture an image based on the satisfied event rule. Next the method 400 may modify at least one parameter of the digital imaging device prior to capturing at least one image from a normal condition to an event image capturing condition and, upon capturing at least one image, returning the digital imaging device to the normal condition.

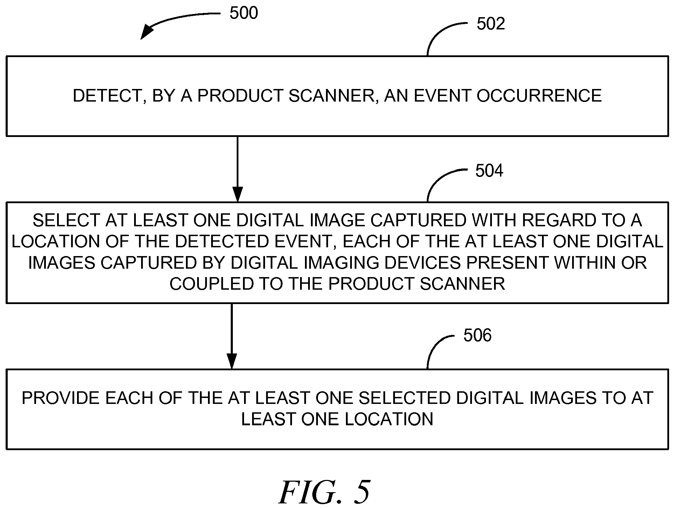

FIG. 5 is a block flow diagram of a method 500, according to an example embodiment. The method 500 is another example of a method that may be implemented on a product scanner, although in some embodiments, the method 500 may also or alternatively be implemented on a computer controlling a POS terminal or other terminal.

In some embodiments, the method 500 includes detecting 502, by a product scanner, an event occurrence. The method 500 may then select 504 at least one digital image captured with regard to a location of the detected event. Each of the at least one digital images are captured by digital imaging devices present within or coupled to the product scanner. The method 500 then provides 506 each of the at least one selected digital images to at least one location.

In some embodiments, the method 500 further includes receiving, by the product scanner, digital images from each of the digital imaging devices and buffering, in a memory device of the product scanner, digital images in an image buffer for each of the digital imaging devices for a most recent period. In some such embodiments, selecting 504 at least one digital image with regard to a location of the detected event includes selecting at least one digital image from the buffered digital images received from a particular digital imaging device that is correlated with the location of the detected event. The digital image selected 504 in such embodiments is selected 504 from the buffered digital images captured at a time when the event was detected. In a further embodiment, an event is detected 502 upon satisfaction of one or more event rules stored within a memory of the product scanner. Each event rule typically includes at least one monitored data condition within the product scanner or data received by the product scanner. Each event rule may include data identifying one or more of the digital imaging devices from which the at least one digital image is to be selected 504 upon satisfaction of the respective event rule.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method (400 or 500) comprising:
detecting an event occurrence (step 402 or 502);
selecting at least one digital image captured with regard to a location of the detected event (step 404 or 504); and
providing each of the at least one selected digital images to at least one location (step 406 or 506).

2. The method of claim 1, further comprising:
adding metadata to at least one of the selected digital images, the metadata including data with regard to the detected event occurrence.

3. The method of claim 1 or 2, wherein providing each of the at least one selected digital images to at least one location includes placing each of the at least one digital images in a transmission queue for transmission to each of the at least one locations in a next available data transmission window.

4. The method of any preceding claim, wherein providing each of the at least one selected digital images includes transmitting each of the at least one selected digital images via a data network to at least one of:
a point of sale (POS) terminal monitoring station (210);
a network data storage location;
a premises video monitoring system; and
a network video recorder (NVR).

5. The method of any preceding claim, wherein each of the at least one digital images are captured by digital imaging devices present within or coupled to a product scanner (104 or 308).

6. The method of claim 5, wherein at least one of the digital imaging devices (318) captures video and at least one selected digital image is a portion of video captured by the video-capturing digital imaging device (318).

7. The method of claim 5, further comprising:
receiving digital images from each of the digital imaging devices (318);
buffering digital images in an image buffer for each of the digital imaging devices (318) for a most recent period; and
wherein selecting at least one digital image with regard to a location of the detected event includes selecting at least one digital image from the buffered digital images received from a particular digital imaging device (318) that is correlated with the location of the detected event, the digital image selected from the buffered digital images captured at a time when the event was detected.

8. The method of claim 5, wherein an event is detected upon satisfaction of one or more event rules stored within a memory of the product scanner (104 or 308), each event rule including at least one data condition monitored by the product scanner (104 or 308).

9. The method of claim 8, wherein at least one event rule monitors a data condition with regard to data received from another device coupled to the product scanner (104 or 308).

10. The method of claim 8, wherein each event rule includes data identifying one or more of the digital imaging devices from which the at least one digital image is to be selected upon satisfaction of the respective event rule.

11. The method of claim 10, further comprising:
upon detection of the event occurrence, identifying at least one digital imaging device to capture an image based on the satisfied event rule;
modifying at least one parameter of the digital imaging device prior to capturing at least one image from a normal condition to an event image capturing condition; and
upon capturing at least one image, returning the digital imaging device to the normal condition.

12. A product scanner (104 or 308) comprising:
at least one imaging device (318) integrated within the product scanner (104 or 308) or electrically coupled thereto;
at least one network interface device;
at least one processor;
at least one memory device; and
an event detection module including instructions stored in the at least one memory device that are executable by the at least one processor to perform data processing activities comprising:
monitoring data conditions within the product scanner (104 or 308) in view of event detection rules, each event detection rule including at least one data condition, which when satisfied, indicates an event occurrence;
selecting at least one digital image captured by one of the at least one imaging devices (318), the selected image selected with regard to a location of and upon an occurrence of a detected event; and
transmitting, via the at least one network interface device, each of the at least one selected digital images to at least one network location.

13. The product scanner of claim 12, wherein the transmitting of each of the at least one selected digital images by the event detection module includes placing each of the at least one digital images in a transmission queue for transmission to each of the at least one network locations in a next available data transmission window.

14. The product scanner of claim 12, wherein the transmitting of each of the at least one selected digital images by the event detection module includes transmitting each of the at least one selected digital images via at least one network interface device to at least one of:
a point of sale (POS) terminal monitoring station (210);
a network data storage location;
a premises video monitoring system; and
a network video recorder (NVR).

15. The product scanner of any of claims 12 to 14, wherein each event rule monitored by the event detection module includes data identifying one or more of the digital imaging devices from which the at least one digital image is to be selected upon satisfaction of the respective event rule, and the data processing activities of the event detection module further comprise:
upon detection of the event occurrence, identifying at least one digital imaging device to capture an image based on the satisfied event rule;
modifying at least one parameter of at least one of the identified digital imaging devices prior to capturing at least one image from a normal condition to an event image capturing condition; and
upon capturing at least one image, returning each of the identified digital imaging devices to the normal condition.
